# EUROPEAN PATENT SPECIFICATION

(11) **EP 2 316 070 B1**
(45) Date of publication and mention of the grant of the patent: **28.08.2019**
(21) Application number: 09769801.3
(22) Date of filing: 24.06.2009
(51) Int. Cl.: G06F 8/61

(54) **METHODS FOR MOBILE PHONE APPLICATIONS**
VERFAHREN FÜR MOBILTELEFONANWENDUNGEN
PROCÉDÉS POUR APPLICATIONS DE TÉLÉPHONIE MOBILE

(30) Priority: 24.06.2008 US 75037 P; 24.06.2008 US 75045 P; 24.06.2008 US 75052 P
(43) Date of publication of application: 04.05.2011
(73) Proprietor: Boukai, Haim, 67328 Tel Aviv (IL); Ost, Sergey, 75109 Rishon LeZion (IL)
(72) Inventor: Boukai, Haim, 67328 Tel Aviv (IL); Ost, Sergey, 75109 Rishon LeZion (IL)
(74) Representative: Lecomte & Partners
(86) International application number: PCT/IL2009/000632
(87) International publication number: WO 2009/156995

(56) References cited:
- US-A1- 2006 043 164
- US-A1- 2007 255 652
- US-A1- 2008 022 276
- US-A1- 2008 141 242
- SCHREINER K: "New viruses up the stakes on old tricks", IEEE INTERNET COMPUTING, IEEE SERVICE CENTER, NEW YORK, NY, US, vol. 6, no. 4, 1 July 2002 (2002-07-01), pages 9-10, XP011094642, ISSN: 1089-7801, DOI: 10.1109/MIC.2002.1020318

## Description

### FIELD OF THE INVENTION

The present invention relates to methods for software distribution for mobile phones, and more particularly, systems and methods for viral distribution of mobile device applications (software, games, content, etc.) by use of contact lists, phone book, or other social network information. Here the term mobile device encompasses mobile telephones, PDAs, mobile computer and other mobile means having GPRS, 3G, Wi-Fi or other mobile data connectivity, and a unique CID or any other mobile terminal identification. Further methods are provided for transfer of phone applications such as international VOIP call applications, without the need for a PC or any other device with fixed internet connection. Finally methods are provided to unify code over a set of mobile platforms thus enabling compatibility with many hardware models reducing development time required for writing mobile applications, allowing easier implementation of the aforementioned techniques.

### BACKGROUND OF THE INVENTION AND PRIOR ART

Viral marketing refers to marketing techniques that use pre-existing social networks to produce increases in brand awareness or to achieve other marketing objectives, such as product sales, through self-replicating processes involving the automated reproduction of multiple copies of data objects. Viral marketing can enable a business to enlarge its customer/user base or services at low acquisition costs. Furthermore, inviting new users or sending the application to new users can be done directly via a mobile application, the internet, etc. Viral distribution, as used herein, refers to distribution techniques using phonebooks or contact lists to distribute information, such as text messages, image messages, computer applications, mobile phone applications, etc., through self-replicating viral processes.

U.S. Application 10/925,896, by Persson et al, provides a method and corresponding equipment by which software from a first device is distributed to a second device and possibly also a server. The software has provision for exchange of information between devices sufficient for the first device to determine whether it includes or stores a version of the software compatible with the second device, which if so is sent to the second device, and otherwise exchanges information with the second device sufficient for the second device to obtain a copy from the server. Similarly, U.S. Patent Application 20060048141, by Campbell provides a person to person mobile phone game distribution service that allows a person who has a mobile phone game or other application installed on their phone to send the game to someone else's mobile phone by building into the game the ability to send a link via using SMS, MMS or other messaging protocol. Both applications provide methods for distributing an application from one mobile device to another single device. However in neither case is there provision for mobile phone application distribution to multiple phone devices. Obvious solutions to such distribution scenarios are obviated due to various hidden difficulties, such as the fact that multiple versions of a given application are generally required for use with various different mobile phone models, which in general utilize different hardware and operating systems, necessitating different software versions for each different phone. This imposes software version complexity and constrains the methods of application distribution; for example, the end-user usually provides the phone brand and model via another communication means such as fixed Internet connection, call representative or IVR, a physical visit to a retail location, etc. Only then the mobile application provider provides the user with an appropriate version of a given application that will operate correctly on the user's mobile phone. Furthermore the end-user or service provider usually does not directly send or transfer the application to another new user due to the fact the new user must in some way indicate the phone brand and model he owns via some means.

A related problem is that many advanced mobile phone users have limited or no PC access. As of the beginning of 2009, 2.4 billion people use Internet-enabled mobile phones. In comparison, 1.3 billion people have access to the Internet via personal computers (PCs). This indicates that there are at least 1.1 billion people that have no net-enabled PC access but do have Internet-enabled mobile phones. This constitutes a large 'invisible' market for mobile applications (including software, clients, and the like, hereinafter referred to as "mobile applications") such as software to make VoIP, or local calls, send SMS, Instant Messaging (IM), send photos and files, play games, use maps, find locations of other users, or any of the plethora of other mobile applications now being devised in this fecund, protean field of innovation. Users of mobile applications are required by the applications providers to access the Internet via PC (or to call a phone representative/IVR or to attend retail location, etc.) in order to open accounts, invite/receive invitations to/from other users, send mobile applications, make payments, check account costs and balances, set various options, etc.

A final, intimately related issue is the limited portability of many web applications. Most mobile phones today support the Java platform/virtual machine, which in principle provides a common environment for running games and other applications on mobile phones (and other embedded devices, PDAs, TV set-top boxes, printers, etc.). There are many mobile phones manufacturers: Nokia, Sony-Ericsson, Samsung, Motorola, LG etc., that ostensibly support a unified standard version of Java, but due to the fact that each manufacturer uses a different OS (operating system), different UI (user interface), different GUI (graphical user interface), different drivers for each functionality, etc., for each mobile device or for each series of mobile devices, the realization of the Java virtual machine in each device may in fact be sensibly different from other realizations, and as a result there are differences in Java functionality on various mobile devices models, both in terms of results of different functions and availability of different functions.

Hence, mobile application/software developers need to fit the mobile application to the various models or series by creating a different version of the application for each model, which require constant development and maintenance resources and effort to comply with new phone models which are launched into the market frequently. There is therefore a need and it would be advantageous to have a universal application that will run on substantially all Java enabled mobile phones or devices, and a means for distribution of such, preferably using viral means that does not require PC access.

The publication "New viruses up the stakes on old tricks", IEEE INTERNET COMPUTING, IEEE SERVICE CENTER, NEW YORK, NY, US, Vol. 6, No. 4 of 1 July 2002, Pages 9-10 discloses a method for distribution of viruses infecting computers.

### SUMMARY OF THE INVENTION

The present invention is defined by appended claims 1 and 10. The system in some embodiments includes a server which provides mobile services. The server includes an applications database, a clients' database and an application distribution unit. The mobile phone of the user includes an installed application which works in coordination with the server. The mobile phone further includes a memory containing address book, in which the user of mobile phone keeps the phone numbers of the user's acquaintanceship. The application extracts at least a portion of the phone numbers of the user's address book and transmits it to the server. The application distribution unit of the server contacts the unregistered users in the list and invites them to install an application. A user that accepts the invitation and installs the provided application becomes a registered client. The present invention is described in terms of Java based applications that operate on mobile phone devices, but the invention is not limited to Java based applications that operate on mobile phone devices, rather including all relevant programming languages and mobile devices.

It is a related object of the present invention to provide a method and system which enables all Internet-enabled mobile users (2.4 billion currently) to use mobile applications which contain everything the end-user needs in order to use and operate a service from within the application without need of a PC or fixed internet connection. These operations include but are not limited to the opening of accounts, sending/receipt of invitations, sending of mobile applications, making mobile payments via credit card, calling card PIN or other money transfer mechanism, the checking of various costs and balances, setting of various options, and the like. All activities relating to the mobile application are performed directly from the mobile application without any need to surf the Internet via a PC, a mobile phone or any other device with Internet browser, nor to call phone representative/IVR or to attend retail location, etc.

Particularly relevant mobile device applications include inter alia the following services:
1. Inviting new users to join the service;
2. Automatic account opening;
3. Application downloading via link from message, SMS, MMS, Service message (WAP push), etc;
4. Placing calls anywhere, locally and internationally, possibly using VoIP technology;
5. Checking call cost and user account balance;
6. Payment using credit card or PIN and calling card code;
7. Transfer of money from one user to another;
8. Sending and receiving of SMS, Instant Messaging (IM), photos and files; and
9. Redirecting calls to another number.

According to teachings of the present invention there is provided a system for providing one or more services for mobile devices with one or more pure mobile applications, according to embodiments of the present invention. The system includes a server which includes a front filter module to send/receive requests to/from a user mobile phone, an authentication engine to filter authorized/not authorized requests requesting services from the server. Preferably, the server further includes an encryption/decryption engine to encrypt outgoing data and decrypt incoming data and a database which holds all customers' related information. The server may further include a call routing module for executing callback services and a billing engine for performing billing related issues.

An aspect of the present invention is to convert the user's mobile phone to a kind of "remote terminal" that connects to the server and uses the server resources to manage the service provided by the server. (Typically, the browser activated on the user's mobile device allows performing most tasks to operate the service). However, the "terminal" is tuned to perform specific functions, and has its own database where it can store information needed for operating the application and can process various tasks (such as encryption of requests sent via internet or encryption of voice) which are limited only by the power of the mobile phone processor.

According to the teachings of the present invention there is furthermore provided a method for writing a device independent application, operable on substantially all mobile phones or devices. The method includes using only commands that are operable on substantially all Java enabled mobile phones or devices. Further objects and advantages will become apparent from a consideration of the ensuing description and drawings.

### BRIEF DESCRIPTION OF THE DRAWINGS

The present invention will become fully understood from the detailed description given herein below and the accompanying drawings, which are given by way of illustration and injector example only and thus not limitative of the present invention.
FIG. 1 is a schematic block diagram of a viral software application system, according to embodiments of the present invention.
FIG. 2 shows a sequence diagram of the transmission of a software application, according to embodiments of the present invention.
FIG. 3 is a schematic data flow of an example application for providing international calls.
FIG. 4 is a schematic illustration of a system providing one or more services to a mobile phone with one or more pure mobile application, according to embodiments of the present invention.
FIG. 5 is a schematic illustration of example pure mobile application to services provided by the system shown in Figure 4.
FIG. 6 is a schematic illustration of the common parts of the actual realization of Java on various mobile phones.

### DESCRIPTION OF THE PREFERRED EMBODIMENTS

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided, so that this disclosure will be thorough and complete, and will fully convey the scope of the invention to those skilled in the art. Unless otherwise defined, all technical and scientific terms used herein have the same meaning as commonly understood by one of ordinary skill in the art to which this invention belongs. The methods and examples provided herein are illustrative only and not intended to be limiting. All materials suggested or mentioned are provided by way of example only, with no limitation.

The term **'SIP'** hereinafter refers to Session Initiation Protocol.

The term **'PBX'** hereinafter refers to Private Branch Exchange.

The term **'VoIP'** hereinafter refers to voice over IP, a system for routing voice traffic over the internet.

The term **'networked mobile device'** hereinafter refers to any mobile device with internet connectivity, and computing capability, such as a netbook or notebook with wireless, WiMax, or Bluetooth connectivity, a mobile phone, a 3G cellphone, smartphone, PDA other mobile means having GPRS, and a unique CID or any other mobile terminal identification such as MAC address, IP address, or the like.

By way of introduction, one principal intention of the present invention includes providing a system and method for viral distribution of mobile phone applications, which does not require PC access. Such applications may preferably but not necessarily be device-independent applications.

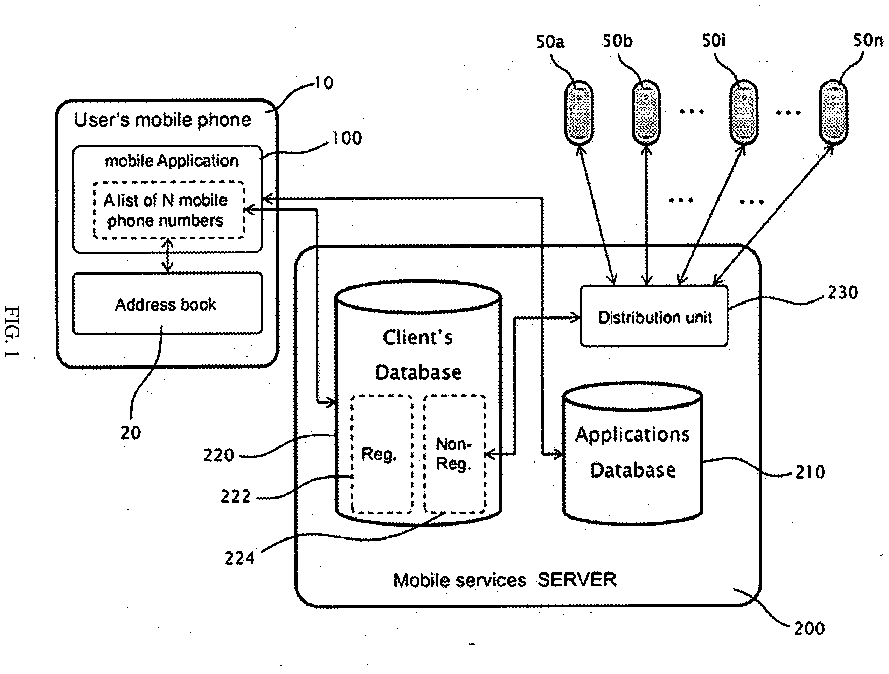

Reference is now made to **Figure 1****,** which presents a schematic block diagram of a viral software application system, according to embodiments of the present invention. In the example shown in Figure 1, mobile phone **10** is a registered client of server **200,** which provides mobile services, for example, international calls services using VoIP. Mobile phone **10** includes installed application **100** which runs independently on mobile phone **10** and works in coordination with server **200.** Mobile phone **10** further includes a memory containing address book **20**, in which the user of mobile phone **10** keeps the phone numbers of his acquaintances. Server **200** includes an applications database **210,** a client's database **220** and an application distribution unit **230.** Client's database **220** is subdivided into a registered clients sub database **222** and non-registered clients sub database **224.** Applications database **210** includes all applications required to be installed in client's mobile phones **10,** in order to provide the available mobile services. Application distribution unit **230** can contact other users **50** in order to invite them to install application **100** or any other application. Typically, user **50** that accepts the invitation and installs the provided application becomes a registered client.

Typically, mobile phone applications are based on the Java J2ME (Java 2 Micro Edition) platform which is known in the art. Hence, Java based applications can be distributed to Java enabled mobile phones, which at this point in time includes the majority of mobile phones used. An aspect of the present invention is to provide a viral marketing distribution method based for example on a Java application, which enables rapid distribution of said application. This will in principle enable rapid growth for a business, e.g. by enlarging its customer base or the like, at low customer acquisition costs. The application can be spread virally for example by inviting new users in a given user's social network, phone list, or the like. Contacted people who likewise become system users likewise send the application to members of their social networks, leading to an exponential growth of potential users.

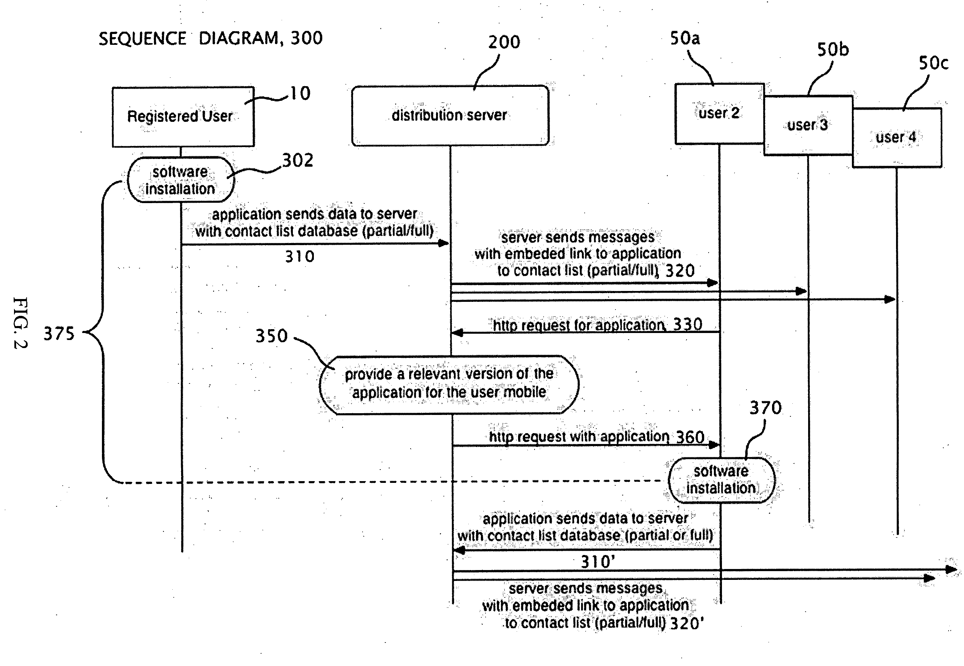

The viral marketing distribution process is illustrated in sequence diagram **300** of the transmission of a software application, shown in **Figure 2****.** User **10** installs (step **302**) application **100** (in Fig. 1) and thereby becomes a registered client of server **200,** and is subsequently added to a registered clients sub-database **222**. Application **100** inquires of user **10** whether application **100** can extract some portion of the user's address book **20** (stored in the mobile device of user **10**.) Application **100** may use any portion of list **20** for the tasks performed by application **100.** In the next step **310** of the process, application **100** transmits list **20** to the distribution server **200.** Server **200** sorts the transferred portion(s) of list **20.** Already-registered users appearing on list **20** are discarded, while unknown users are added to a non-registered clients sub database **224.** In the next step **320** of the process, server **200** sends messages, with (for example) embedded links to application **100,** to at least a portion of unregistered users **50a-c** on list **20.** Server **200** activates application distribution unit **230** (Figure 1), which in turn sends messages, with embedded link to application **100,** to at least a portion of unregistered users **50a-c** on list **20.** The message is selected from a group of messaging protocols, including: WAP PUSH, SMS (text messaging), ESMS, MMS, email, instant messaging or any other messaging protocol known in the art.

In a first embodiment, when application **100** is written as Universal/Generic Software that fits all mobile devices (to be discussed in depth below). Server **200** sends a link to users **50** to download application **100.** In a second embodiment, when application **100** is written for a particular mobile device or group of mobile devices, server **200** provides the appropriate specific application **100** that will run on the mobile device of a specific user **50.** In the next step **330** of the process, unregistered user **50a** optionally accepts the invitation to install application **100.** If user **50a** accepts the invitation to install application **100,** a file such as a JAD file, jar file, or the like is returned to server **200.** The following step **350** has the server **200** provide a relevant version of application **100** to user **50a.** In the first embodiment, (when application **100** is written as Universal/Generic Software that runs on most or all mobile devices), server **200** sends a link to user **50a** to download application **100,** which fits all mobile devices. In the second embodiment, (when application **100** is written in a specific device/group-of-devices Software), server **200** sends a link to user **50a** to the website of the provider of application **100,** wherefrom user **50a** can download application **100.**

When user **50a** clicks on the link, which is contained for example in an SMS message, a browser optionally may open automatically, and the server **200** receives from the browser of user **50a** various information, such as:
a. IP Address. Typically, for mobile phones it is the IP address of the mobile service provider.
b. The mobile device browser identification (Headers or 'fingerprint' information, including for instance device type and/or model).
c. Other information such as: mobile device model, brand, IMEI etc.

This information is currently provided as part of standard web communication protocol, but is in general not used for purposes of mobile device identification as disclosed herein. In standard web communication protocol there is generally provided a 'fingerprint' containing information including device type/model or other identification, which the current invention exploits to determine version requirements for software. In this way the user does not have to indicate device version information, as it is determined automatically.

Server then **200** analyzes the received information to determine the type of application **100** that is compatible with the device of user **50a.** For example, server **200** can use the IP Address of the device of user **50a** to send application **100** in the right language according to the location of the mobile operator (for example: sending application in the French language to users with IP address of Orange France). Another example, server **200** can use the browser identification to send a compatible application to an iPhone, which does not run Java.

STEP **360:** Server **200** provides the appropriate version of application **100** to user **50a.** STEP **370:** Application **100** is installed on the mobile phone of user **50a.**

STEP **310':** Application **100** transmits a list of potential users extracted from user 50a's address book, stored in the mobile phone of user **50a,** to server **200.**

STEP **320':** Server **200** sends messages, with (for example) an embedded link or links to application **100,** to at least a portion of unregistered users **50** on the list of potential customers extracted from the address book stored in the mobile phone of user **50a.**

From here, the process may repeat restarting at step **370** for each of the new users who have been contacted, branching out until all addresses in all phone books reachable have been attempted.

It should be noted that steps **302-370** complete a full distribution cycle **375.**

In certain embodiments of the present invention, server **200** keeps track of the number of invitations a particular unregistered user has been sent to install a given application **100.** If user **50** rejects the invitation more than some threshold number of invitations, the server **200** stops sending invitations to install application **100** to user **50.**

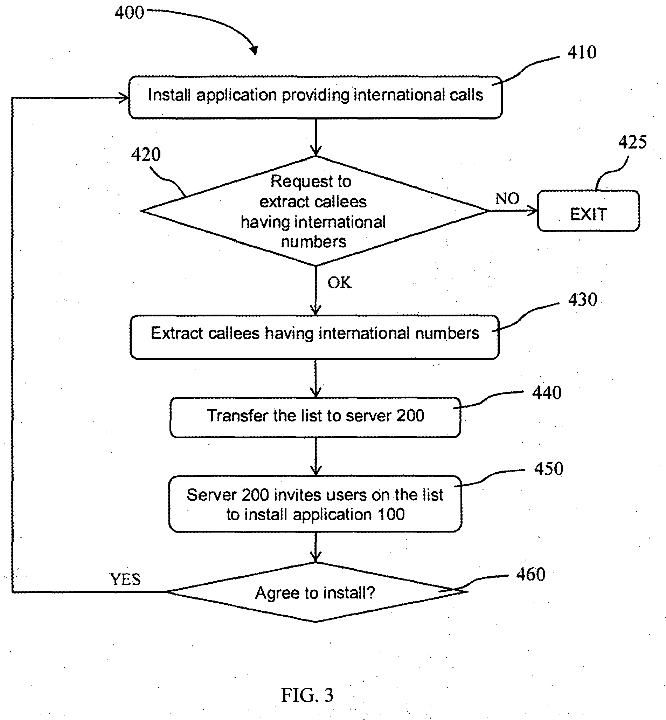

In an example application, application **100** provides international calls services. The example is schematically illustrated in Figure 3.

Here we illustrate further steps as follows.

STEP **410:** Application **100** (of Fig. 1) is installed on the mobile phone of user **10.** STEP **420:** Application **100** inquires user **10** to extract the callees having international phone numbers from the address book of user **10.**

STEP **425:** If user **10** denies the request, exit.

STEP **430:** If user **10** agrees, application **100** extracts the callees having international phone numbers from the address book.

STEP **440:** Application **100** transmits the extracted list to server **200.**

STEP **450:** Server **200** sends messages, with embedded link to application **100,** to at least a portion of unregistered users **50** on the extracted list, inviting users **50** to install application **100** on their mobile phone.

STEP 460: If user **50** agrees, go to step **410.**

It is further within provision of the present invention to provide a method and system to allow all Internet-enabled mobile service users (2.4 billion currently) to utilize certain mobile applications which contain everything the end-user needs in order to use and operate a set of services including, but not limited to, opening an account, inviting/receiving and sending mobile applications, making mobile payments (via credit card, calling card PIN or prepaid card code & transfer money), checking costs and balances, setting various options, and the like. As described, one key application is provision of international calling service over VOIP or other networked service, to avoid standard long distance fees. As described herein, such provision is made without requiring use of a PC, allowing the services to be offered to any net-enabled cellphone user.

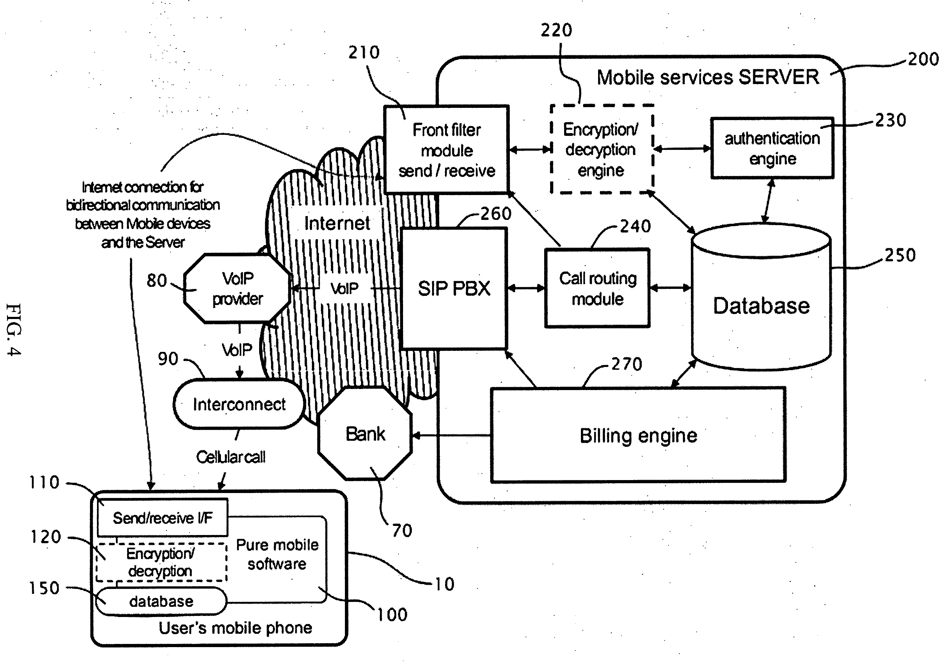

Reference is now made to **Figure 4****,** which is a schematic illustration of a system for providing one or more services to a mobile phone with one or more pure mobile application, according to embodiments of the present invention. The mobile services system includes server **200** with front filter module **210** that sends/receives calls to/from a user mobile phone **10.** Also included is an authentication engine **230** to handle incoming calls requesting services from server **200.** Preferably, server **200** further includes an encryption/decryption engine **220** to encrypt outgoing data and decrypt incoming data. Preferably, server **200** further includes database **250** which holds all customers' related information. Preferably, server **200** further includes call routing module **240** for executing callback services, billing engine **270** for performing billing related services and SIP-PBX **260** (PBX - Private Branch Exchange; SIP - Session Initiation Protocol) which is a privately owned telephone switching network based on Voice over IP (VoIP) to enable telephony over the internet, involving multimedia elements such as video, voice, chat, gaming, and virtual reality. VoIP **80** provider routes calls to the destination. When user **10** places a request for a call PBX **260** receives a command to dial a certain number, the call is routed through provider **80** which routes it, optionally, through Interconnect **90**, when a VoIP call from internet is converted into regular call via regular lines over a GSM network.

On the user's side, the user's mobile phone **10** in one embodiment includes 'pure' mobile software which is typically a Java platform that is targeted at small, standalone or connectable consumer and embedded devices. The pure mobile software technology consists of a virtual machine and a set of APIs suitable for tailored runtime environments for these devices. The pure mobile software technology has two primary kinds of components - configurations and profiles. Mobile phone **10** further includes send/receive module **110** and database **150** including user's related information and the applications that enables using services provided by server **200.** Mobile phone **10** preferably further includes encryption/decryption module **120** to encrypt outgoing data and decrypt incoming data. Receiving module **210** is typically a software program, which resides on one of the open ports of server **200** and "listens" (waiting) to commands which are sent from the a user's mobile phone **10** by software 100. When "garbage" data or non authorized command is sent to server **200,** it is simply ignored. After a recognized incoming request is received by server **200** the request is decrypted and then checked against the user related information in database **250** to see if the user who sent the command is an authorized user. If the sender is positively authenticated, server **200** runs a number of internal operations to handle the incoming request. Server **200** interprets the command into a relevant list of tasks required to provide the service associated with the command received from mobile phone software **100.** In this case, software **100** running on mobile phone **10** serves as a terminal of server **200,** which handles a number of tasks to fully provide the service. For each different service request sent the server **200** a different list of operations may need to be performed.

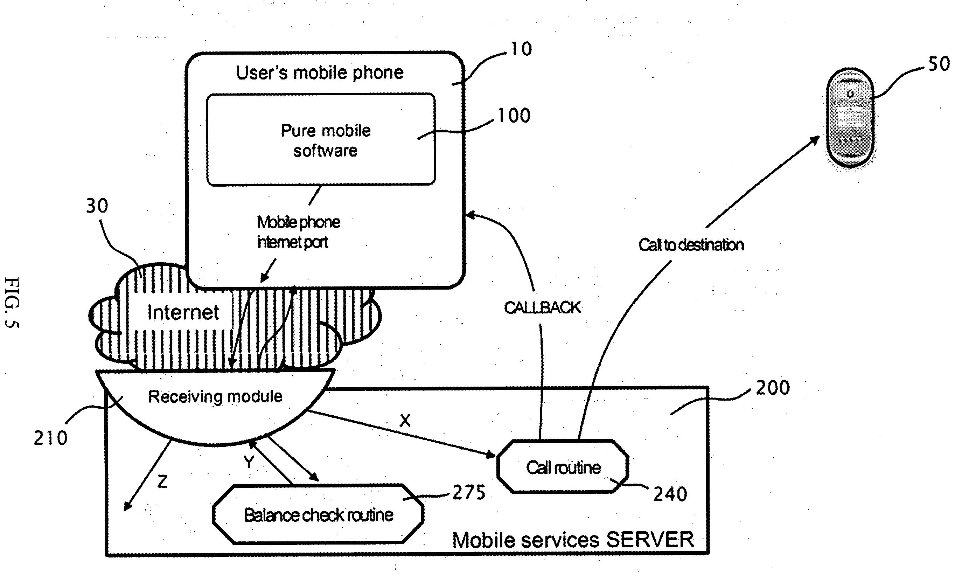

Reference is now made to Figure 5, which is a schematic illustration of example pure mobile application to services provided by server **200.** The difference in the tasks performed by different service requests are exemplified in the following examples.

### Example 1

A request is made to "call number: +1-123-1234567" (request for service X in Figure 5). Server **200** performs the following tasks:
a. receive the request for service from via internet **30;**
b. optionally, decrypts the request;
c. authenticate the customer using database **250;**
d. checks if the customer has enough money in the account;
e. send a request to PBX to perform a callback to the customer; and
f. as soon as the customer answers, calls to desired destination **50.**

### Example 2

A request is made to "view balance" in a user's account (request for service Y in Figure 5). Server **200** performs the following tasks:
a. receive the request for service from via internet **30;**
b. optionally, decrypts the request;
c. authenticate the customer using database **250;**
d. check the customers' balance using balance check module **275;** and
e. send a requested data back to mobile phone software **100** via an opened port.

It should be noted that when "http" protocol is used, the java application sends a command via POST command and receives an answer from server **200** with the balance data, the balance is shown to customer via the java interface. Billing engine **270** handles all the requests that are involved with money transactions. Billing engine **270** is used to compute and keep track on the balance of the account of a user, add the cost of placed calls, send SMS messages, make money transfers to other users, etc. Typically, the user makes a deposit into the users account with the service provider, for example with a credit card, using the application installed on the user's mobile phone. When billing engine **270** receives a request to add money to an account it sends a request (for example, sends credit card details) to the appropriate bank (or to the bank gateway) for authorization and if authorized, charges the credit card and deposits a relevant amount of money into the user's account.

When the user uses a prepaid card, billing engine **270** checks if the card is valid and deposits the relevant amount of money into user's account.

Another provision of the present invention includes providing a method for writing a device independent application. This can be for instance a Java based application, operable on substantially all Java enabled mobile phones or devices. The method comprises using only commands that are operable on substantially all Java enabled mobile phones or devices. By using only the common parts of the actual realization of Java on all the various mobile devices, one in effect implements a Universal Mobile Java Application, which operates correctly on substantially all mobile platforms that support Java. This includes the majority of existing mobile phones.

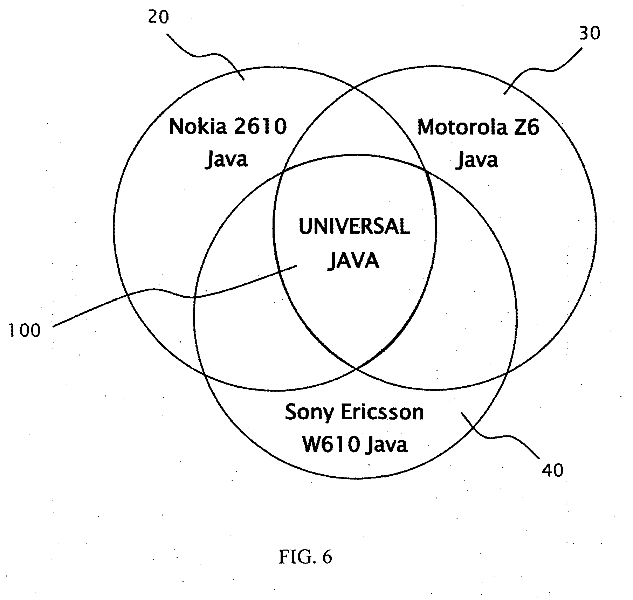

Reference is made to **Figure 6****,** which is a schematic illustration of the common parts of examples the actual realization of Java (**20, 30** and **40**) on various mobile phones, thereby creating a Universal Mobile Java application **100** which operates correctly on substantially all mobile phones that support Java, according to an embodiment of the present invention. In the example shown in Figure 6, some Nokia mobile phones typically use the Nokia 2610 Java language, some Motorola mobile phones typically use the Motorola Z6 Java language and some Sony/Ericsson mobile phones typically use the Sony/Ericsson W610 Java language. The application commands, that are valid in substantially all commonly used Java based applications, form the set of commands used by the Universal Mobile Java language of the present invention. Furthermore, the Universal Mobile Java applications typically use the original UI and GUI provided by the mobile phone maker. Thus, according to aspects of the present invention, the output screens provided by a Universal Mobile Java application will look, graphically, similar to other applications running on a specific mobile phone and provided by that mobile phone maker. The Universal Mobile Java language of the present invention enables developers to create applications to provide mobile services described above such as making VoIP calls or regular calls, sending SMS, Instant Messaging (IM), sending photos and files, sending mobile application, making payments via credit card or code, checking costs and balance, etc. An aspect of the present invention is to enable a mobile application/software developer to substantially reduce the development and maintenance resources and efforts, not having to develop different software versions for each existing mobile device model or series, or for each of the new phone models that are frequently launched into the market.

To summarize, a universal mobile application may be sent to substantially all users with Java enabled mobile devices. Universal mobile applications enable mobile phone services providers to offer services such as inviting new users, phone number authentication and automatic account opening for new users. Other mobile phone applications include providing low cost VoIP or regular calls, sending SMS, Instant Messaging (IM), sending photos and files, etc.

The invention being thus described in terms of embodiments and examples, it will be obvious that the same may be varied in many ways. Such variations are not to be regarded as a departure from the scope of the invention, and all such modifications as would be obvious to one skilled in the art, are intended to be included within the scope of the patent application.

The embodiments chosen are provided, so that this disclosure will be thorough and complete, and will fully convey the scope of the invention to those skilled in the art. Unless otherwise defined, all technical and scientific terms used herein have the same meaning as commonly understood by one of ordinary skill in the art to which this invention belongs. The methods and examples provided herein are illustrative only and not intended to be limiting. All materials suggested or mentioned are provided by way of example only, with no limitation.

## Claims

1. A method for viral distribution of applications (100) on networked mobile telephones (10, 50) comprising steps of:
a. installing an application (100) on said networked mobile telephones,
b. reading, by means of said application (100), some portion of a contact list stored on said networked mobile telephones;
c. transmitting said portion of said contact list to a server (200);
d. sending invitation to install said application (100) to non-registered users from said portion of said contact list;
e. installing said application (100) on some portion of those networked mobile telephones listed on said contact list upon accepting of said invitation to install said application (100);
f. repeating steps b-e for each contact on each of said networked mobile telephones, whereby viral distribution of said application (100) across a multitude of networked mobile telephones is achieved; and
g. providing the server (200), adapted to provide said application running on said networked mobile telephone working in coordination with said server by means of an applications database (210), a client's database (220) and an application distribution unit (230), said client's database (220) being subdivided into registered clients sub database (222) and non-registered clients sub database (224), said applications database (210) including all applications required to be installed in client's mobile networked telephones, said application distribution unit (230) being adapted to contact non-registered users in said non-registered clients sub database (224) to invite some part of said non-registered users to install said application (100).

2. The method of claim 1, wherein said step of installing said application (100) is accomplished by means selected from a group consisting of: determining a mobile telephone type and model; sending an SMS message; sending an SMS message containing a link to a location of said application allowing subsequent download of said application; sending an SMS message containing said application; sending an MMS message; sending an MMS message containing a link to a location of said application allowing subsequent download of said application; sending an MMS message containing said application; sending an email message; sending an email message containing a link to a location of said application allowing subsequent download of said application; sending an email message containing said application; sending an Instant Message; sending an Instant Message containing a link to a location of said application allowing subsequent download of said application; sending an Instant Message containing said application; sending a service message; sending a service message containing a link to a location of said application allowing subsequent download of said application; sending a service message containing said application; sending a WAP push message; sending a WAP push message containing a link to a location of said application allowing subsequent download of said application; sending a WAP push message containing said application; and sending said application from one networked mobile telephone to a second networked mobile telephone.

3. The method of claim 1, where said application (100) is implemented on a subset of a programming language comprising functions that are valid on networked mobile telephones.

4. The method of claim 1, where said application (100) comprises means for actions selected from the group consisting of: VoIP calls, regular cellular calls, sending SMS messages, sending Instant Messaging (IM) messages, sending photos, sending files, and sending email.

5. The method of claim 1, where said server or application (100) comprises means selected from a group consisting of: means for encrypting and decrypting all communications used thereby; means for inviting new users to use said application; automatic account opening; application download via link from a source selected from the group consisting of: email message, SMS, MMS, Service message, and WAP push ; means for placing calls anywhere locally and internationally; means for checking call cost and account balance; payment using means selected from the group consisting of: credit card, PIN, and calling card code; transfer of money from one user to another; means for sending and receiving SMS, Instant Messaging (IM), photos and files; means for redirecting calls to another number; means for sharing photos; means for sharing files; and means for sharing content, wherein useful additional networked connectivity is provided to users without requiring use of a personal computer (PC).

6. The method of claim 1, wherein said server (200) is additionally adapted to perform tasks selected from a group consisting of: receiving service requests via the internet (30); decrypting said requests; authenticating the customer using database (250); checking the customers' balance using balance check module (275); sending requested data back to networked mobile telephone software (100); sending a request to private branch exchange (PBX) to perform a callback to the customer; and directing calls to desired destination (50).

7. The method of claim 3, where said language utilizes the original user interface (UI) and graphical user interface (GUI) available to a given networked mobile telephone.

8. The method of claim 7, where said application (100) comprises means for actions selected from the group consisting of: VoIP calls, regular cellular calls, sending SMS messages, sending Instant Messaging (IM) messages, sending photos, sending files, and sending email.

9. The method of claim 2, wherein said server (200) is additionally provided with a billing engine (270) adapted to perform all requests requiring monetary exchanges, said billing engine adapted to compute and keep track of user balances, compute and add costs of placed calls, send SMS messages, make money transfers to other users.

10. A system for viral distribution of applications (100) on networked mobile telephones comprising:
a. application (100) running on said networked mobile telephones,
b. a database storing a contact list (20) of said networked mobile telephones;
c. means for sending invitation to install said application on some portion of those networked mobile telephones listed on said contact list;
d. means for installing said application upon accepting of said invitation to install said application (100);
e. means to repeat steps b-d for each contact on each of said networked mobile telephones,
f. a server (200), adapted to provide said application running on said networked mobile telephone working in coordination with said server by means of an applications database (210), a client's database (220) and an application distribution unit (230) residing on said server (200), said client's database (220) being subdivided into registered clients sub database (222) and non-registered clients sub database (224), said applications database (210) including all applications (100) required to be installed in client's mobile networked telephones, said application distribution unit being adapted to contact non-registered users in said non-registered clients sub database (224) to invite some portion of said non-registered users to install application (100); and
g. whereby viral distribution of applications across a multitude of networked mobile telephones is achieved.

11. The system of claim 10, where said application comprises means for actions selected from the group consisting of: VoIP calls, regular cellular calls, sending SMS messages, sending Instant Messaging (IM) messages, sending photos, sending files, sharing data objects, and sending email.

12. The system of claim 10, additionally comprising means for performing tasks selected from a group consisting of: sending an SMS message; sending an SMS message contains a link to a location of said application allowing subsequent download of said application; sending an SMS message containing said application; sending an MMS message; sending an MMS message contains a link to a location of said application allowing subsequent download of said application; sending an MMS message containing said application; sending an email message; sending an email message contains a link to a location of said application allowing subsequent download of said application; sending an email message containing said application; sending an Instant Message; sending an Instant Message contains a link to a location of said application allowing subsequent download of said application; sending an Instant Message containing said application; sending a service message; sending a service message contains a link to a location of said application allowing subsequent download of said application; sending a service message containing said application; sending a WAP push message; sending a WAP push message contains a link to a location of said application allowing subsequent download of said application; sending a WAP push message containing said application; and directly sending said application from one networked mobile telephone to a second networked mobile telephone.

13. The system of claim 10, where said application (100) is implemented on a subset of a programming language comprising functions that is valid on networked mobile telephones.

14. The system of claim 10, where said server comprises means selected from a group consisting of: means for encryption and decryption of all communications used thereby; determining mobile telephone type and model; inviting new users to use said application ; automatic account opening; application download via link from a source selected from the group consisting of: email message, SMS, MMS, Service message, and WAP push; placing calls anywhere locally and internationally; checking call cost and account balance; payment using means selected from the group consisting of : credit card, PIN, and calling card code; transfer of money from one user to another; sending and receiving SMS, Instant Messaging (IM), photos, emails, content, and files; redirecting calls to another number; sharing photos; sharing files and content, wherein useful additional networked connectivity is provided to users without requiring use of a personal computer (PC).

15. The system of claim 10, wherein said server (200) is additionally adapted to perform tasks selected from a group consisting of: receiving service requests via the internet (30); decrypting said requests; authenticating the customer using database (250); checking the customers' balance using balance check module (275); sending requested data back to networked mobile telephone software (100; sending a request to PBX to perform a callback to the customer; and directing calls to desired destination (50).

16. The system of claim 10, where said subset utilizes the original user interface (UI) and graphical user interface (GUI), available to a given networked mobile telephone.

17. The system of claim 16, where said application (100) comprises means for actions selected from the group consisting of: placing VoIP calls, placing regular cellular calls, sending and receiving SMS messages, sending and receiving Instant Messaging (IM) messages, sending and receiving photos, sending and receiving files, and sending and receiving email.

18. The system of claim 17, wherein said server (200) is additionally provided with a billing engine (270) adapted to perform all requests requiring monetary exchanges, said billing engine adapted to compute and keep track of user balances, compute and add costs of placed calls, send SMS messages, and perform money transfers to other users.

## Patentansprüche

1. Ein Verfahren zur viralen Verteilung von Anwendungen (100) auf vernetzten Mobiltelefonen (10, 50) umfassend Schritte des:
a. Installierens einer Anwendung (100) auf den besagten vernetzten Mobiltelefonen;
b. Lesens mittels der besagten Anwendung (100) einen Teil einer Kontaktliste, die auf den besagten vernetzten Mobiltelefonen gespeichert ist;
c. Übertragens des besagten Teils von der besagten Kontaktliste an einen Server (200);
d. Sendens einer Einladung, die besagte Anwendungen (100) zu installieren, an nicht registrierte Nutzer von dem besagten Teil der besagten Kontaktliste;
e. Installierens der besagten Anwendung (100) auf einem Teil von jenen vernetzten Mobiltelefonen, die in der besagten Kontaktliste gelistet sind, nach dem Akzeptieren der besagten Einladung, die besagte Anwendung (100) zu installieren;
f. Wiederholens der Schritte b-e für jeden Kontakt auf jedem der besagten vernetzten Mobiltelefone, wodurch eine virale Verteilung der besagten Anwendung (100) über eine Vielzahl von vernetzten Mobiltelefonen hinweg erreicht wird; und
g. Bereitstellens dem Server (200), der dazu angepasst ist, die besagte Anwendung, die auf dem besagten vernetzten Mobiltelefon läuft und in Koordination mit dem besagten Server mittels einer Anwendungsdatenbank (210) arbeitet, bereitzustellen, eine Kundendatenbank (220) und eine Anwendungsverteilungseinheit (230), wobei die besagte Kundendatenbank (220) weiter unterteilt ist in eine registrierte Kunden-Unterdatenbank (222) und eine nicht registerierte Kunden-Unterdatenbank (224), wobei die besagte Anwendungsdatenbank (210) alle Anwendungen umfasst, von denen erforderlich ist, dass sie auf den vernetzten Mobiltelefonen des Kunden installiert werden, wobei die besagte Anwendungsverteilungseinheit (230) dazu angepasst ist, nicht registerierte Nutzer in der besagten nicht registerierte Kunden-Unterdatenbank (224) zu kontakieren und einen Teil der besagten nicht registerierten Nutzer einzuladen, die besagte Anwendung (100) zu installieren.

2. Das Verfahren von Anspruch 1, wobei der besagte Schritte des Installierens der besagten Anwendung (100) erreicht wird durch Mittel ausgewählt aus einer Gruppe bestehend aus: Bestimmen eines Mobiltelefontyps- und -modells; Senden einer SMS-Nachricht; Senden einer SMS-Nachricht, die einen Link zu einem Ort der besagten Anwendung enthält, was ein nachfolgendes Herunterladen der besagten Anwendung erlaubt; Senden einer SMS-Nachricht, die die besagte Anwendung enthält; Senden einer MMS-Nachricht; Senden einer MMS-Nachricht, die einen Link zu einem Ort der besagten Anwendung enthält, was ein nachfolgendes Herunterladen der besagten Anwendung erlaubt; Senden einer MMS-Nachricht, die die besagte Anwendung enthält; Senden einer E-Mail-Nachricht; Senden einer E-Mail-Nachricht, die einen Link zu einem Ort der besagten Anwendung enthält, was ein nachfolgendes Herunterladen der besagten Anwendung erlaubt; Senden einer E-Mail-Nachricht, die die besagte Anwendung enthält; Senden einer Sofortnachricht; Senden einer Sofortnachricht, die einen Link zu einem Ort der besagten Anwendung enthält, was ein nachfolgendes Herunterladen der besagten Anwendung erlaubt; Senden einer Sofortnachricht, die die besagte Anwendung enthält; Senden einer Dienst-Nachricht; Senden einer Dienst-Nachricht, die einen Link zu einem Ort der besagten Anwendung enthält, was ein nachfolgendes Herunterladen der besagten Anwendung erlaubt; Senden einer Dienst-Nachricht, die die besagte Anwendung enthält; Senden einer WAP-Push-Nachricht; Senden einer WAP-Push-Nachricht, die einen Link zu einem Ort der besagten Anwendung enthält, was ein nachfolgendes Herunterladen der besagten Anwendung erlaubt; Senden einer WAP-Push-Nachricht, die die besagte Anwendung enthält; und Senden der besagten Anwendung von einem vernetzten Mobiltelefon zu einem zweiten vernetzten Mobiltelefon.

3. Das Verfahren von Anspruch 1, wobei die besagte Anwendung (100) auf einer Untergruppe einer Programmiersprache implementiert ist, die Funktionnen umfasst, die auf vernetzten Mobiltelefonen valide sind.

4. Das Verfahren von Anspruch 1, wobei die besagte Anwendung (100) Mittel für Handlungen umfasst ausgewählt aus der Gruppe bestehend aus: VoIP-Anrufe, normale Mobilfunkanrufe, Versenden von SMS-Nachrichten, Versenden von Sofort-(IM)-Nachrichten, Versenden von Fotos, Versenden von Dateien und Versenden von E-Mail.

5. Das Verfahren von Anspruch 1, wobei der besagte Server oder die besagte Anwendung (100) Mittel umfasst ausgewählt aus einer Gruppe bestehend aus: Mittel zum Verschlüsseln und Entschlüsseln aller Kommunikationen, die dadurch verwendet werden; Mittel zum Einladen neuer Nutzer, die besagten Anwendung zu nutzen; automatisches Accountöffhen; Anwendungsherunterladen über einen Link von einer Quelle ausgewählt aus der Gruppe bestehend aus: E-Mail-Nachricht, SMS, MMS, Dienst-Nachricht und WAP-Push; Mittel zum Machen eines Anrufes irgendwo lokal und international; Mittel zum Prüfen von Anrufkosten und Kontostand; Bezahlen unter Verwendung von Mitteln ausgewählt aus der Gruppe bestehend aus: Kreditkarte, PIN und Anrufkartencode; Überweisen von Geld von einem Nutzer zu einem anderen; Mittel zum Senden und Empfangen von SMS, Sofortnachrichten (IM), Fotos und Dateien; Mittel zum Umleiten von Anrufen zu einer anderen Nummer; Mittel zum Teilen von Fotos; Mittel zum Teilen von Dateien; und Mittel zum Teilen von Inhalt, wobei Nutzern eine nützliche zusätzliche Vernetzungskonnektivität bereitgestellt wird, ohne dass die Verwendung eines Personalcomputers (PC) gefordert wird.

6. Das Verfahren von Anspruch 1, wobei der besagte Server (200) zusätzlich dazu angepasst ist, Aufgaben auszuführen ausgewählt aus einer Gruppe bestehend aus: Empfangen von Serviceanfragen über das Internet (30); Entschlüsseln der besagten Anfragen; Authentifizieren des Kundens unter Verwendung der Datenbank (250); Prüfen des Kontostandes des Kundens unter Verwendung eines Kontostandsprüfinoduls (275); Senden angefragter Daten zurück zu der Software (100) des vernetzten Mobiltelefons; Senden einer Anfrage zu einer Nebenstellenanlage (PBX), um einen Rückruf zu dem Kunden durchzuführen; und Leiten von Anrufen zu einem gewünschten Bestimmungsort (50).

7. Das Verfahren von Anspruch 3, wobei die besagte Sprache das ursprüngliche Nutzerinterface (UI) und das grafische Nutzerinterfache verwendet, das auf einem gegebenen vernetzten Mobiltelefon verfügbar ist.

8. Das Verfahren von Anspruch 7, wobei die besagte Anwendung (100) Mittel umfasst für Handlungen ausgewählt aus der Gruppe bestehend aus VoIP-Anrufe, normale Mobilfunanrufe, Versenden von SMS-Nachrichten, Versenden von Sofort-(IM)-Nachrichten, Versenden von Fotos, Versenden von Dateien und Versenden von E-Mail.

9. Das Verfahren von Anspruch 2, wobei der besagte Server (200) zusätzlich bereitgestellt ist mit einer Abrechnungsmaschine (270), die dazu angepasst ist, alle Anfragen durchzuführen, die Geldaustausche erfordern, wobei die besagte Abrechnungsmaschine dazu angepasst ist, die Kontostände von Nutzern zu berechnen und nachzuverfolgen, die Kosten von gemachten Anrufen zu berechnen und hinzuzufügen, SMS-Nachrichten zu senden, Geldüberweisungen an andere Nutzer zu machen.

10. Ein System zur viralen Verteilung von Anwendungen (100) auf vernetzten Mobiltelefonen umfassend:
a. eine Anwendung (100), die auf den besagten vernetzten Mobiltelefonen läuft;
b. eine Datenbank, die eine Kontaktliste (20) von besagten vernetzten Mobiltelefonen speichert;
c. Mittel zum Senden einer Einladung, die besagte Anwendung auf einem Teil von jenen vernetzten Mobiltelefonen, die in der besagten Kontaktliste gelistet sind, zu installieren;
d. Mittel zum Installieren der besagten Anwendung nach Akzeptieren der besagten Einladung, die besagte Anwendung (100) zu installieren;
e. Mittel, um die Schritte b-e für jeden Kontakt auf jedem der besagten vernetzten Mobiltelefone zu wiederholen; und
f. einen Server (200), der dazu angepasst ist, die besagte Anwendung, die auf dem besagten vernetzten Mobiltelefon läuft und in Koordination mit dem besagten Server mittels einer Anwendungsdatenbank (210) arbeitet, bereitzustellen, eine Kundendatenbank (220) und eine Anwendungsverteilungseinheit (230), die auf dem besagten Server (200) residiert, wobei die besagte Kundendatenbank (220) weiter unterteilt ist in eine registrierte Kunden-Unterdatenbank (222) und eine nicht registerierte Kunden-Unterdatenbank (224), wobei die besagte Anwendungsdatenbank (210) alle Anwendungen (100) umfasst, von denen erforderlich ist, dass sie auf den vernetzten Mobiltelefonen eines Kunden installiert sind, wobei die besagte Anwendungsverteilungseinheit dazu angepasst ist, nicht registerierte Nutzer in der besagten nicht registerierte Kunden-Unterdatenbank (224) zu kontakieren und einen Teil der besagten nicht registerierten Nutzer einzuladen, die besagte Anwendung (100) zu installieren; und
g. wodurch eine virale Verteilung von Anwendungen über eine Vielzahl von vernetzten Mobiltelefonen hinweg erreicht wird.

11. Das System von Anspruch 10, wobei die besagte Anwendung Mittel für Handlungen umfasst ausgewählt aus der Gruppe bestehend aus: VoIP-Anrufe, normale Mobilfunanrufe, Versenden von SMS-Nachrichten, Versenden von Sofort-(IM)-Nachrichten, Versenden von Fotos, Versenden von Dateien, Teilen von Datenobjekten und Versenden von E-Mail.

12. Das System von Anspruch 10, zuätzlich umfassend Mittel zum Ausführen von Aufgaben ausgewählt aus einer Gruppe bestehend aus: Senden einer SMS-Nachricht; Senden einer SMS-Nachricht, die einen Link zu einem Ort der besagten Anwendung enthält, was ein nachfolgendes Herunterladen der besagten Anwendung erlaubt; Senden einer SMS-Nachricht, die die besagte Anwendung enthält; Senden einer MMS-Nachricht; Senden einer MMS-Nachricht, die einen Link zu einem Ort der besagten Anwendung enthält, was ein nachfolgendes Herunterladen der besagten Anwendung erlaubt; Senden einer MMS-Nachricht, die die besagte Anwendung enthält; Senden einer E-Mail-Nachricht; Senden einer E-Mail-Nachricht, die einen Link zu einem Ort der besagten Anwendung enthält, was ein nachfolgendes Herunterladen der besagten Anwendung erlaubt; Senden einer E-Mail-Nachricht, die die besagte Anwendung enthält; Senden einer Sofortnachricht; Senden einer Sofortnachricht, die einen Link zu einem Ort der besagten Anwendung enthält, was ein nachfolgendes Herunterladen der besagten Anwendung erlaubt; Senden einer Sofortnachricht, die die besagte Anwendung enthält; Senden einer Dienst-Nachricht; Senden einer Dienst-Nachricht, die einen Link zu einem Ort der besagten Anwendung enthält, was ein nachfolgendes Herunterladen der besagten Anwendung erlaubt; Senden einer Dienst-Nachricht, die die besagte Anwendung enthält; Senden einer WAP-Push-Nachricht; Senden einer WAP-Push-Nachricht, die einen Link zu einem Ort der besagten Anwendung enthält, was ein nachfolgendes Herunterladen der besagten Anwendung erlaubt; Senden einer WAP-Push-Nachricht, die die besagte Anwendung enthält; und direktes Senden der besagten Anwendung von einem vernetzten Mobiltelefon zu einem zweiten vernetzten Mobiltelefon.

13. Das System von Anspruch 10, wobei die besagte Anwendung (100) auf einer Untergruppe einer Programmiersprache implementiert ist, die Funktionnen umfasst, die auf vernetzten Mobiltelefonen valide sind.

14. Das System von Anspruch 10, wobei der besagte Server Mittel umfasst ausgewählt aus einer Gruppe bestehend aus: Mittel zum Verschlüsseln und Entschlüsseln aller Kommunikationen, die dadurch verwendet werden; Bestimmung von Mobiltelefontyp- und - modell; Einladen neuer Nutzer, die besagten Anwendung zu nutzen; automatisches Accountöffhen; Anwendungsherunterladen über einen Link von einer Quelle ausgewählt aus der Gruppe bestehend aus: E-Mail-Nachricht, SMS, MMS, Dienst-Nachricht und WAP-Push; Machen eines Anrufes irgendwo lokal und international; Prüfen von Anrufkosten und Kontostand; Bezahlen unter Verwendung von Mitteln ausgewählt aus der Gruppe bestehend aus: Kreditkarte, PIN und Anrufkartencode; Überweisen von Geld von einem Nutzer zu einem anderen; Senden und Empfangen von SMS, Sofortnachrichten (IM), Fotos, E-Mails, Inhalt und Dateien; Umleiten von Anrufen zu einer anderen Nummer; Teilen von Fotos; Teilen von Dateien und Inhalt, wobei Nutzern eine nützliche zusätzliche Vernetzungskonnektivität bereitgestellt wird, ohne dass die Verwendung eines Personalcomputers (PC) gefordert wird.

15. Das System von Anspruch 10, wobei der besagte Server (200) zusätzlich dazu angepasst ist, Aufgaben auszuführen ausgewählt aus einer Gruppe bestehend aus: Empfangen von Serviceanfragen über das Internet (30); Entschlüsseln der besagten Anfragen; Authentifizieren des Kundens unter Verwendung der Datenbank (250); Prüfen des Kontostandes des Kundens unter Verwendung eines Kontostandsprüfmoduls (275); Senden angefragter Daten zurück zu der Software (100) des vernetzten Mobiltelefons; Senden einer Anfrage zu einer Nebenstellenanlage (PBX), um einen Rückruf zu dem Kunden durchzuführen; und Leiten von Anrufen zu einem gewünschten Bestimmungsort (50).

16. Das System von Anspruch 10, wobei die besagte Untergruppe das ursprüngliche Nutzerinterface (UI) und das grafische Nutzerinterfache verwendet, dass auf einem gegebenen vernetzten Mobiltelefon verfügbar ist.

17. Das System von Anspruch 16, wobei die besagte Anwendung (100) Mittel umfasst für Handlungen ausgewählt aus der Gruppe bestehend aus: Machen von VoIP-Anrufen, Machen von normalen Mobilfunanrufen, Versenden und Empfangen von SMS-Nachrichten, Versenden und Empfangen von Sofort-(IM)-Nachrichten, Versenden und Empfangen von Fotos, Versenden und Empfangen von Dateien und Versenden und Empfangen von E-Mail.

18. Das System von Anspruch 17, wobei der besagte Server (200) zusätzlich bereitgestellt ist mit einer Abrechnungsmaschine (270), die dazu angepasst ist, alle Anfragen durchzuführen, die Geldaustausche erfordern, wobei die besagte Abrechnungsmaschine dazu angepasst ist, die Kontostände von Nutzern zu berechnen und nachzuverfolgen, die Kosten von gemachten Anrufen zu berechnen und hinzuzufügen, SMS-Nachrichten zu senden und Geldüberweisungen an andere Nutzer durchzuführen.

## Revendications

1. Procédé pour la distribution virale d'applications (100) à des téléphones mobiles mis en réseau (10, 50) comprenant les étapes dans lesquelles :
a. on installe une application (100) sur lesdits téléphones mobiles mis en réseau ;
b. on lit, au moyen de ladite application (100), une certaine portion d'une liste de contacts enregistrés sur lesdits téléphones mobiles mis en réseau ;
c. on transmet ladite portion de ladite liste de contacts à un serveur (200) ;
d. on envoie une invitation invitant à installer ladite application (100) à des utilisateurs non enregistrés faisant partie de ladite portion de ladite liste de contacts ;
e. on installe ladite application (100) sur une certaine portion de ces téléphones mobiles mis en réseau repris dans ladite liste de contacts après acceptation de ladite invitation invitant à installer ladite application (100) ;
f. on répète les étapes b-e pour chaque contact sur chacun desdits téléphones mobiles mis en réseau d'une manière telle que l'on met en oeuvre une distribution virale de ladite application (100) à travers une multitude de téléphones mobiles mis en réseau ; et
g. on procure au serveur (200), conçu pour la mise en oeuvre de ladite application sur lesdits téléphones mobiles mis en réseau qui travaillent en coordination avec ledit serveur au moyen d'une base de données d'applications (210), d'une base de données de clients (220) et d'une unité de distribution d'application (230), ladite base de données de clients (220) étant subdivisée en une base de données secondaire de clients enregistrés (222) et en une base de données secondaire de clients non enregistrés (224), ladite base de données d'applications (210) englobant toutes les applications qui doivent nécessairement être installées dans les téléphones mobiles des clients mis en réseau, ladite unité de distribution d'application (230) étant conçue pour entrer en contact avec des utilisateurs non enregistrés dans ladite base de données secondaire de clients non enregistrés (224) dans le but d'inviter une certaine partie du desdits utilisateurs non enregistrés à installer ladite application (100).

2. Procédé selon la revendication 1, dans lequel ladite étape d'installation de ladite application (100) est mise en oeuvre par l'intermédiaire de moyens qui sont sélectionnés à partir d'un groupe constitué par : la détermination d'un modèle et d'un type de téléphone mobile ; l'envoi d'un message SMS ; l'envoi d'un message SMS contenant un lien vers une localisation de ladite application qui permet le téléchargement ultérieur de ladite application ; l'envoi d'un message SMS contenant ladite application ; l'envoi d'un message MMS ; l'envoi d'un message MMS contenant un lien vers une localisation de ladite application permettant le téléchargement ultérieur de ladite application ; l'envoi d'un message MMS contenant ladite application ; l'envoi d'un message e-mail ; l'envoi d'un message e-mail contenant un lien vers une localisation de ladite application permettant le téléchargement ultérieur de ladite application ; l'envoi d'un message e-mail contenant ladite application ; l'envoi d'un message instantané ; l'envoi d'un message instantané contenant un lien vers une localisation de ladite application permettant le téléchargement ultérieur de ladite application ; l'envoi d'un message instantané contenant ladite application ; l'envoi d'un message de service ; l'envoi d'un message de service contenant un lien vers une localisation de ladite application permettant le téléchargement ultérieur de ladite application ; l'envoi d'un message de service contenant ladite application ; l'envoi d'un message WAP à diffusion automatique ; l'envoi d'un message WAP à diffusion automatique contenant un lien vers une localisation de ladite application permettant le téléchargement ultérieur de ladite application ; l'envoi d'un message WAP à diffusion automatique contenant ladite application ; et l'envoi de ladite application à partir d'un premier téléphone mobile mis en réseau à un second téléphone mobile mis en réseau.

3. Procédé selon la revendication 1, dans lequel ladite application (100) est mise en oeuvre sur un sous-groupe d'un langage de programmation comprenant des fonctions qui sont autorisées sur des téléphones mobiles mis en réseau.

4. Procédé selon la revendication 1, dans lequel ladite application (100) comprend des moyens destinés à entreprendre des actions qui sont choisies parmi le groupe constitué par : des appels VoIP, des appels cellulaires ordinaires, l'envoi de messages SMS, l'envoi de messages de type messagerie instantanée (IM), l'envoi de photos, l'envoi de fichiers et l'envoi d'e-mails.

5. Procédé selon la revendication 1, dans lequel ledit serveur ou ladite application (100) comprend des moyens qui sont choisis parmi un groupe constitué par : des moyens destinés au chiffrement et au déchiffrement de toutes les communications utilisées par le biais de ladite application ; des moyens destinés à inviter de nouveaux utilisateurs à utiliser ladite application ; une ouverture automatique d'un compte ; le téléchargement d'une application via un lien à partir d'une source choisie parmi le groupe constitué par : un message e-mail, un message SMS, un message MMS, un message de service, et un message WAP à diffusion automatique ; des moyens destinés à passer des appels à n'importe quel endroit dans un environnement local et dans un environnement international ; des moyens destinés à vérifier le coût de l'appel et le solde du compte ; un payement utilisant des moyens qui sont choisis parmi le groupe constitué par : une carte de crédit, un code PIN et un code de carte d'appel ; un transfert d'argent d'un utilisateur à un autre ; des moyens destinés à l'envoi et à la réception de SMS, d'une messagerie instantanée (IM), de photos et de fichiers ; des moyens destinés à rediriger des appels vers un autre numéro ; des moyens destinés à partager des photos ; des moyens destinés à partager des fichiers ; et des moyens destinés à partager un contenu ; dans lequel une connectivité au réseau utile supplémentaire est fournie à des utilisateurs sans nécessiter l'utilisation d'un ordinateur personnel (PC).

6. Procédé selon la revendication 1, dans lequel ledit serveur (200) est en outre conçu pour la réalisation de tâches qui sont choisies parmi un groupe constitué par le fait de : recevoir des demandes de service via l'Internet (30) ; déchiffrer lesdites demandes ; authentifier l'abonné qui utilise la base de données (250) ; vérifier le solde de l'abonné en utilisant un module de vérification du solde (275) ; renvoyer les données demandées à un logiciel de téléphonie mobile mis en réseau (100) ; envoyer une demande à une installation téléphonique privée (PBX) dans le but d'envoyer un rappel à l'abonné ; et acheminer des appels à une destination désirée (50).

7. Procédé selon la revendication 3, dans lequel ledit langage utilise l'interface utilisateur (UI) et l'interface graphique utilisateur (GUI) originales disponibles pour un téléphone mobile donné mis en réseau.

8. Procédé selon la revendication 7, dans lequel ladite application (100) comprend des moyens destinés à la réalisation de tâches qui sont choisies parmi un groupe constitué par : des appels VoIP, des appels cellulaires ordinaires, l'envoi de messages SMS, l'envoi de messages du type d'une messagerie instantanée (IM), l'envoi de photos, l'envoi de fichiers et l'envoi d'e-mails.

9. Procédé selon la revendication 2, dans lequel ledit serveur (200) est en outre muni d'un moteur de facturation (270) conçu pour mettre en oeuvre toutes les demandes qui nécessitent des échanges monétaires, ledit moteur de facturation étant conçu pour calculer et suivre à la trace les soldes des utilisateurs, pour calculer et ajouter les coûts liés à des appels passés, pour envoyer des messages SMS, pour réaliser des transferts d'argent vers d'autres utilisateurs.

10. Système pour une distribution virale d'applications (100) à des téléphones mobiles mis en réseau, comprenant :
a. une application (100) qui s'exécute sur lesdites téléphones mobiles mis en réseau ;
b. une base de données qui stocke une liste de contacts (20) desdits téléphones mobiles mis en réseau ;
c. un moyen destiné à l'envoi d'une invitation à installer ladite application à une certaine portion de ces téléphones mobiles mis en réseau repris dans ladite liste de contacts ;
d. un moyen destiné à l'installation de ladite application après l'acceptation de ladite invitation à installer ladite application (100) ;
e. un moyen destiné à la répétition des étapes b-d pour chaque contact sur chacun desdits téléphones mobiles mis en réseau ;
f. un serveur (200) conçu pour procurer ladite application qui s'exécute sur lesdites téléphones mobiles mis en réseau travaillant en coordination avec ledit serveur au moyen d'une base de données d'applications (210), d'une base de données de clients (220) et d'une unité de distribution d'application (230) résidant sur ledit serveur (220), ladite base de données de clients (220) étant subdivisée en une base de données secondaire de clients enregistrés (222) et en une base de données secondaire de clients non enregistrés (224), ladite base de données d'applications (210) englobant toutes les applications (100) qui doivent être nécessairement installées dans les téléphones mobiles des clients mis en réseau, ladite unité de distribution d'application étant conçue pour entrer en contact avec des utilisateurs non enregistrés dans ladite base de données secondaire de clients non enregistrés (224) dans le but d'inviter une certaine partie desdits utilisateurs non enregistrés à installer ladite application (100) ; et
g. d'une manière telle que l'on met en oeuvre une distribution virale d'applications à travers une multitude de téléphones mobiles mis en réseau.

11. Système selon la revendication 10, dans lequel ladite application comprend des moyens destinés à entreprendre des actions qui sont choisies parmi le groupe constitué par : des appels VoIP, des appels cellulaires ordinaires, l'envoi de messages SMS, l'envoi de messages de type messagerie instantanée (IM), l'envoi de photos, l'envoi de fichiers, le partage d'objets de données et l'envoi d'e-mails.

12. Système selon la revendication 10, comprenant en outre un moyen pour l'exécution de tâches qui sont choisies parmi un groupe constitué par : l'envoi d'un message SMS ; l'envoi d'un message SMS qui contient un lien vers une localisation de ladite application qui permet le téléchargement ultérieur de ladite application ; l'envoi d'un message SMS contenant ladite application ; l'envoi d'un message MMS ; l'envoi d'un message MMS qui contient un lien vers une localisation de ladite application permettant le téléchargement ultérieur de ladite application ; l'envoi d'un message MMS contenant ladite application ; l'envoi d'un message e-mail ; l'envoi d'un message e-mail qui contient un lien vers une localisation de ladite application permettant le téléchargement ultérieur de ladite application ; l'envoi d'un message e-mail contenant ladite application ; l'envoi d'un message instantané ; l'envoi d'un message instantané qui contient un lien vers une localisation de ladite application permettant le téléchargement ultérieur de ladite application ; l'envoi d'un message instantané contenant ladite application ; l'envoi d'un message de service ; l'envoi d'un message de service qui contient un lien vers une localisation de ladite application permettant le téléchargement ultérieur de ladite application ; l'envoi d'un message de service contenant ladite application ; l'envoi d'un message WAP à diffusion automatique ; l'envoi d'un message WAP à diffusion automatique qui contient un lien vers une localisation de ladite application permettant le téléchargement ultérieur de ladite application ; l'envoi d'un message WAP à diffusion automatique contenant ladite application ; et l'envoi de ladite application de manière directe à partir d'un téléphone mobile mis en réseau à un second téléphone mobile mis en réseau.

13. Système selon la revendication 10, dans lequel ladite application (100) est exécutée sur un sous-groupe d'un langage de programmation comprenant des fonctions qui sont autorisées sur des téléphones mobiles mis en réseau.

14. Système selon la revendication 10, dans lequel ledit serveur comprend des moyens qui sont choisis parmi un groupe constitué par : des moyens destinés au chiffrement et au déchiffrement de toutes les communications utilisées par le biais de ladite application ; la détermination du modèle et du type de téléphone mobile ; des moyens destinés à inviter de nouveaux utilisateurs à utiliser ladite application ; une ouverture automatique d'un compte ; le téléchargement d'une application via un lien partir d'une source choisie parmi le groupe constitué par : un message e-mail, un message SMS, un message MMS, un message de service, et un message WAP à diffusion automatique ; l'établissement de communications téléphoniques à n'importe quel endroit dans un environnement local et dans un environnement international ; la vérification du coût de l'appel et du solde du compte ; un payement utilisant des moyens qui sont choisis parmi le groupe constitué par : une carte de crédit, un code PIN et un code de carte d'appel ; un transfert d'argent d'un utilisateur à un autre ; l'envoi et la réception d'un message SMS, d'une messagerie instantanée (IM), de photos, d'e-mails, de contenus et de fichiers ; la redirection d'appels vers un autre numéro ; le partage de photos ; le partage de fichiers ; et le partage d'un contenu ; dans lequel une connectivité au réseau utile supplémentaire est fournie à des utilisateurs sans nécessiter l'utilisation d'un ordinateur personnel (PC).

15. Système selon la revendication 10, dans lequel ledit serveur (200) est en outre conçu pour la réalisation de tâches qui sont choisies parmi un groupe constitué par le fait de : recevoir des demandes de services via l'Internet (30) ; déchiffrer lesdites demandes ; authentifier l'abonné qui utilise la base de données (250) ; vérifier le solde de l'abonné en utilisant un module de vérification du solde (275) ; renvoyer des données demandées à un logiciel de téléphonie mobile mis en réseau (100) ; envoyer une demande à une installation téléphonique privée (PBX) dans le but d'envoyer un rappel à l'abonné ; et acheminer des appels à une destination désirée (50).

16. Système selon la revendication 10, dans lequel ledit sous-groupe utilise l'interface utilisateur (UI) et l'interface graphique utilisateur (GUI) originales disponibles pour un téléphone mobile donné mis en réseau.

17. Système selon la revendication 16, dans lequel ladite application (100) comprend des moyens destinés à mettre en oeuvre des actions qui sont choisies parmi le groupe constitué par le fait de : passer des appels VoIP, passer des appels cellulaires ordinaires, envoyer et recevoir des messages SMS, envoyer et recevoir des messages de type messagerie instantanée (IM), envoyer et recevoir des photos, envoyer et recevoir des fichiers, et envoyer et recevoir des e-mails.

18. Système selon la revendication 17, dans lequel ledit serveur (200) est en outre équipé d'un moteur de facturation (270) conçu pour mettre en oeuvre toutes les demandes qui nécessitent des échanges monétaires, ledit moteur de facturation étant conçu pour calculer et suivre à la trace les soldes des utilisateurs, pour calculer et ajouter les coûts liés à des appels passés, pour envoyer des messages SMS, et pour réaliser des transferts d'argent vers d'autres utilisateurs.
